# EUROPEAN PATENT APPLICATION

(11) **EP 4 644 983 A1**
(43) Date of publication of application: **05.11.2025**
(21) Application number: 23912469.6
(22) Date of filing: 22.09.2023
(51) Int. Cl.: G02F 1/1339, G02F 1/1337, G02F 1/1335, G02F 1/13363, G02F 1/139, E06B 9/24, B60J 3/04

(54) **OPTICAL LAMINATE, METHOD FOR MANUFACTURING SAME, AND SMART WINDOW COMPRISING SAME**

(30) Priority: 29.12.2022 KR 20220188858
(71) Applicant: Dongwoo Fine-Chem Co., Ltd., Iksan-si, Jeollabuk-do 54631 (KR)
(72) Inventor: AHN, Hong-Jun, Iksan-si, Jeonbuk-do 54631 (KR)
(74) Representative: Betten & Resch
(86) International application number: PCT/KR2023/014462
(87) International publication number: WO 2024/143786

(57) **Abstract**

The present invention relates to a variable transmittance optical laminate, a method for manufacturing same, and a smart window comprising same, wherein the variable transmittance optical laminate comprises: a first laminate including a first polarizing plate, one or more column spacers formed on one surface of the first polarizing plate, a first transparent conductive layer formed on the first polarizing plate on which the one or more column spacers are formed, and a first alignment film formed on the first transparent conductive layer; a second laminate facing the first laminate and laminated in the order of a second polarizing plate, a second transparent conductive layer, and a second alignment film; and a liquid crystal layer disposed between the first alignment film and the second alignment film, the column spacers including an inclination angle in which the angle formed by the tangent of the side portion and the first polarizing plate is an acute angle.

## Description

### Technical Field

The present invention relates to a transmittance variable optical laminate, a method for manufacturing the same, and a smart window including the same.

### Background Art

In general, there are many cases in which an external light blocking coating is applied to a glass window of a means of transportation such as a vehicle. However, the transmittance of a conventional glass window of a means of transportation is fixed, and the transmittance of the external light blocking coating is also fixed. Therefore, the overall transmittance of the conventional window of the means of transportation is fixed, which may cause an accident. For example, when the overall transmittance is preset low, there is no problem during day when ambient light is sufficient. However, there is a problem in that it is difficult for a driver or the like to properly check the surroundings of the means of transportation at night when ambient light is insufficient. Alternatively, when the overall transmittance is preset high, there is a problem of causing glare to a driver or the like during day when ambient light is sufficient. Accordingly, a transmittance variable optical laminate capable of changing the transmittance of light when a voltage is applied has been developed.

The transmittance variable optical laminate is driven to change transmittance by driving liquid crystals in response to application of a voltage. The transmittance variable optical laminates developed to date are manufactured by forming a conductive layer for driving liquid crystals on a separate substrate and combining the conductive layer with other elements, such as a polarizing plate.

For example, Japanese Patent Application Publication No. 2018-010035 also discloses a transmittance variable optical laminate including a transparent electrode layer formed on a polycarbonate (PC) substrate having a predetermined thickness.

However, if a separate substrate is included to form the conductive layer as described above, there are problems in that the manufacturing process becomes complicated, which increases the manufacturing cost, the thickness of the laminate increases, and retardation occurs, which causes a change in the transmittance.

Therefore, there is a need for development of a transmittance variable optical laminate that, by not including a separate substrate for forming a conductive layer, may have a simplified manufacturing process and a reduced thickness.

Furthermore, the transmittance variable optical laminate includes two laminates, wherein a liquid crystal layer is disposed between the two laminates, and a spacer is positioned to maintain a constant spacing between the two laminates. The spacers are classified into ball spacers and column spacers depending on their shape and arrangement method.

Conventionally, ball spacers can be incorporated into the liquid crystal layer through a dispersion process. In this case, there are problems in that the liquid crystal alignment is disturbed due to the ball spacers, and in some cases, the ball spacers clump together, and in some cases, the ball spacers flow into the adhesive portion of the sealant, which reduce the adhesive strength of the sealant, causing the liquid crystals to flow out of the panel, resulting in defects.

Meanwhile, when column spacers are to be formed in a liquid crystal layer, the column spacers are arranged on a conductive layer through a photolithography process and coated with an alignment film. In this case, there are problems in that a short circuit current is induced between the conductive layer and the alignment film due to the remaining film after the photolithography process, and in that the coating solvent penetrates into the column spacers when coating the column spacers with the alignment film, causing deformation.

In addition, in a case where an alignment film is first formed on a conductive layer and column spacers are formed on the alignment film through a photolithography process, there is a problem in that the performance of the alignment film is changes by exposure to ultraviolet (UV) rays, causing defects.

Therefore, there is a need for development of a transmittance variable optical laminate that may have a simplified manufacturing process and a reduced thickness by not including a separate substrate for forming a conductive layer, and at the same time, may prevent cracks or scratches from occurring during the process, has ensured spacer reliability, and has an improved liquid crystal appearance.

### DISCLOSURE

### Technical Problem

An object of the present invention is to provide a transmittance variable optical laminate that has excellent reliability for liquid crystal driving by preventing deformation of spacers, change in performance of an alignment film, and occurrence of liquid crystal defects.

Another object of the present invention is to provide a transmittance variable optical laminate that has a simplified manufacturing process by not including a separate substrate for forming a conductive layer.

Still another object of the present invention is to provide a transmittance variable optical laminate that has a significantly reduced thickness by not including a separate substrate for forming a conductive layer.

Yet another object of the present invention is to provide a transmittance variable optical laminate that has improved transmittance in a light transmission mode by not including a separate substrate for forming a conductive layer.

Still yet another object of the present invention is to provide a smart window including the transmittance variable optical laminate.

However, the objects of the present invention are not limited to the problems mentioned above, and other problems not mentioned may be clearly understood by those skilled in the art from the following description.

A further object of the present invention is to provide a transmittance variable optical laminate that has an increased range of transmittance variation between a light transmission mode and a light-blocking mode by including at least one reflective polarizing plate.

### Technical Solution

The present invention relates to a transmittance variable optical laminate including: a first laminate including a first polarizing plate, at least one column spacer formed on one surface of the first polarizing plate, a first transparent conductive layer formed on the first polarizing plate having the at least one column spacer formed thereon, and a first alignment film formed on the first transparent conductive layer; a second laminate opposite to the first laminate and including a second polarizing plate, a second transparent conductive layer, and a second alignment film sequentially laminated; and a liquid crystal layer disposed between the first alignment film and the second alignment film, wherein the inclination angle formed by the tangent of the lateral side of the column spacer with respect to the first polarizing plate comprises an acute angle.

In a first aspect of the present invention, the inclination angle of the column spacer may be 70° or less.

In a second aspect of the present invention, the column spacer may have a height of 2 to 10 µm and a top width of 4 to 60 µm.

In a third aspect of the present invention, the area of the top of the column spacer may be 0.2 to 5.0% of the area of the second polarizing plate.

In a fourth aspect of the present invention, at least one of the first alignment film and the second alignment film may have a thickness of 30 to 300 nm.

In a fifth aspect of the present invention, at least one of the first alignment film and the second alignment film may be driven in at least one mode selected from among a twisted nematic (TN) mode, a super-twisted nematic (STN) mode, and a vertical alignment (VA) mode.

In a sixth aspect of the present invention, at least one of the first polarizing plate and the second polarizing plate may include at least one functional layer selected from the group consisting of a protective layer, a retardation matching layer, and a refractive index-matching layer.

In a seventh aspect of the present invention, at least one of the first polarizing plate and the second polarizing plate may have a thickness of 30 to 200 µm.

In an eighth aspect of the present invention, the first transparent conductive layer may be formed in direct contact with the first polarizing plate having the column spacer formed thereon, without including a separate substrate therebetween, and the second transparent conductive layer may be formed in direct contact with the second polarizing plate without including a separate substrate therebetween.

In a ninth aspect of the present invention, the first transparent conductive layer may be formed on the first polarizing plate having the column spacer formed thereon with a highly adhesive layer interposed therebetween, and the second transparent conductive layer may be formed on the second polarizing plate with a highly adhesive layer interposed therebetween.

In a tenth aspect of the present invention, at least one of the first transparent conductive layer and the second transparent conductive layer may include at least one selected from the group consisting of a transparent conductive oxide, a metal, a carbonaceous material, a conductive polymer, a conductive ink, and nanowires.

In an eleventh aspect of the present invention, the transmittance variable optical laminate may further include at least one selected from the group consisting of a pressure-sensitive adhesive layer, a UV-absorbing layer, and a hard coating layer.

In a twelfth aspect of the present invention, the pressure-sensitive adhesive layer may be formed using at least one pressure-sensitive adhesive selected from an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, and a photocurable adhesive.

The present invention also relates to a method for manufacturing the above-mentioned transmittance variable optical laminate.

The present invention also relates to a smart window including the transmittance variable optical laminate.

### Advantageous Effects

The transmittance variable optical laminate of the present invention may have excellent reliability for liquid crystal driving by preventing deformation of spacers, change in performance of an alignment film, and occurrence of liquid crystal defects.

In addition, the transmittance variable optical laminate according to the present invention may have a simplified manufacturing process compared to a conventional optical laminate, because it is possible to omit a process of forming a conductive layer on a substrate and bonding the same to another member in order to manufacture a conventional optical laminate.

In addition, the transmittance variable optical laminate according to the present invention may have a significantly reduced thickness compared to a conventional optical laminate, because the conductive layer is formed directly one surface of the polarizing plate and a separate substrate for forming the conductive layer is not included.

In addition, the transmittance variable optical laminate according to the present invention may have improved transmittance in a light transmission mode compared to a conventional optical laminate, because the conductive layer is formed directly one surface of the polarizing plate and a separate substrate for forming the conductive layer is not included.

In addition, the transmittance variable optical laminate according to the present invention may have an increased range of transmittance variation between a light transmission mode and a light-blocking mode compared to a conventional optical laminate by including at least one reflective polarizing plate.

### Brief Description of Drawings

FIG. 1 shows the structure of a transmittance variable optical laminate according to one embodiment of the present invention.
FIG. 2 is an enlarged view of a region M of the present invention.
FIG. 3 shows the structure of a transmittance variable optical laminate according to another embodiment of the present invention.
FIGS. 4 and 5a and 5b show the laminated structures of smart windows according to one or more embodiments of the present invention.
FIG. 6 shows the appearance of a portion where black amorphous spots have occurred in a transmittance variable optical laminate.
FIG. 7 shows the appearance of a portion where liquid crystal spots have occurred on the surface of a transmittance variable optical laminate.
FIG. 8 shows the appearance of a portion where light leakage has occurred on the surface of a transmittance variable optical laminate.

In the figures, each reference numeral denotes the following:

| | | | |
|---|---|---|---|
| 100: | first laminate | 110: | polarizing plate |
| 110-1: | first polarizing plate | 110-2: | second polarizing plate |
| 150: | column spacer | 200: | second laminate |
| 210: | transparent conductive layer | 210-1: | first transparent conductive layer |
| 210-2: | second transparent conductive layer | 300: | liquid crystal layer |
| 310: | alignment film | 310-1: | first alignment film |
| 310-2: | second alignment film | 350: | liquid crystal compound |
| 400: | pressure-sensitive adhesive layer | 450: | sealant |
| 500: | glass for vehicle | 600: | window for building (window glass) |
| a: | inclination angle of column spacer | h: | height of column spacer |
| d: | top width of column spacer | p: | tangent of lateral side of column spacer |
| s: | lateral side of column spacer | | |

### Best Mode

The present invention relates to a transmittance variable optical laminate including at least one column spacer on a polarizing plate. Specifically, the present invention relates to a transmittance variable optical laminate in which at least one column spacer is formed on one surface of a polarizing plate, and a conductive layer for liquid crystal driving is formed directly on the polarizing plate having the column spacer formed thereon, thereby ensuring the durability of the column spacer, thus allowing the optical laminate to have excellent reliability for liquid crystal driving, and which, by not including a separate substrate for forming the conductive layer, has a reduced thickness and improved transmittance in a light transmission mode.

More specifically, the present invention relates to a transmittance variable optical laminate including: a first laminate including a first polarizing plate, at least one column spacer formed on one surface of the first polarizing plate, a first transparent conductive layer formed on the first polarizing plate having the at least one column spacer formed thereon, and a first alignment film formed on the first transparent conductive layer; a second laminate opposite to the first laminate and including a second polarizing plate, a second transparent conductive layer, and a second alignment film sequentially laminated; and a liquid crystal layer disposed between the first alignment film and the second alignment film, wherein the inclination angle formed by the tangent of the lateral side of the column spacer with respect to the first polarizing plate is an acute angle.

The transmittance variable optical laminate of the present invention is particularly suitable for technical fields where the transmittance of light can be changed in response to the application of voltage, and may be used, for example, for a smart window or the like.

The term "smart window" means an optical structure that controls the amount of light or heat passing therethrough by changing light transmittance in response to the application of an electrical signal. In other words, the smart window is configured to be changed into a transparent, opaque or translucent state by voltage and is also called variable transmittance glass, light control glass, or smart glass.

The smart window may be used as a partition for partitioning the internal space of a vehicle or a building or as a partition for privacy, and may be used as a skylight window arranged at an opening of a building. Furthermore, the smart window may be used as highway signs, notice boards, score boards, clocks or advertisement screens, and may be used to replace windows of vehicles, buses, airplanes, ships, or trains, or glass of means of transportation, such as a sunroof.

The transmittance variable optical laminate of the present invention may also be used for the smart window in the various technical fields mentioned above, but since the conductive layer is formed directly on the polarizing plate, the optical laminate does not include a separate substrate for forming the conductive layer, and thus has a small thickness and is favorable in terms of flexural properties. Thus, the optical laminate of the present invention may be particularly suitable for use for a smart window for a vehicle or a building. In one or more embodiments, a smart window having applied thereto the transmittance variable optical laminate of the present invention may be used as a front window, a rear window, a side window, and a sunroof window of an automobile, or a window for a building, and in addition to being used to block external light, may also be used for partitioning the internal space of an automobile or a building, or for protecting privacy, such as being used as an internal partition.

Hereinafter, embodiments of the present invention will be described in more detail with reference to the accompanying drawings. However, the following drawings attached to this specification illustrate preferred embodiments of the present invention, and serve to aid in further understanding of the technical idea of the present invention together with the contents of the present invention described above. Therefore, the present invention should not be interpreted as being limited only to matters described in the drawings.

Terms used in the present specification are for purpose of describing embodiments and are not intended to limit the present invention. In the present specification, singular forms also include plural forms unless the context clearly indicates otherwise. For example, the term "polarizing plate" as used herein may mean at least one polarizing plate among a first polarizing plate and a second polarizing plate, the term "transparent conductive layer" may mean at least one transparent conductive layer among a first transparent conductive layer and a second transparent conductive layer, and the term "alignment film" may mean at least one alignment film among a first alignment film and a second alignment film.

As used herein, "comprises" and/or "comprising" are/is intended to denote the existence of one or more stated components, steps, operations, and/or elements, but do not exclude the probability of existence or addition of one or more other components, steps, operations, and/or elements. Throughout the specification, like reference numerals refer to like components.

Spatially relative terms, such as "below", "lower surface", "beneath ", "above", "upper surface", "on" and the like, may be used to easily describe the relationship between one element or component(s) and other element or components(s) as illustrated in the figures. Spatially relative terms should be understood to encompass different orientations of the component in use or operation, in addition to the orientation depicted in the figures. Spatially relative terms should be understood to encompass different orientations of the element in use or operation, in addition to the orientation depicted in the figures. For example, when elements illustrated in the figures are turned over, an element described as being "below" or "beneath" another element may be placed "above" the other element. Thus, the exemplary term "below" may include both the terms "above" and "below". The element may also be oriented in a different direction, and thus spatially relative terms may be interpreted according to the orientation.

As used herein, the term "plane direction" may be interpreted as a direction orthogonal to the polarizing plate and/or the transparent conductive layer, that is, the direction of the user's view.

### <Transmittance Variable Optical Laminate>

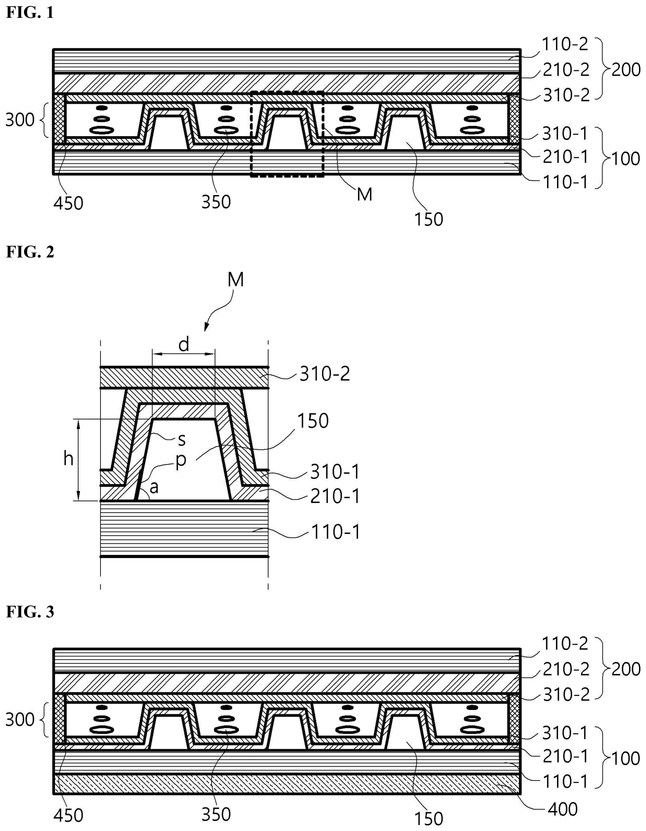

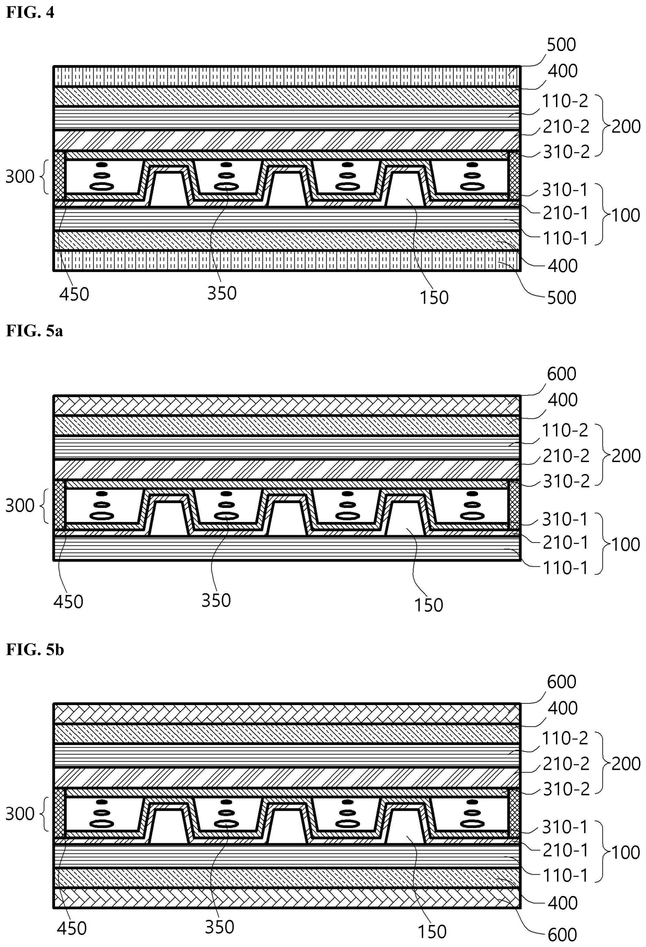

FIG. 1 shows the structure of a transmittance variable optical laminate according to one embodiment of the present invention, and FIG. 2 is an enlarged view of a region M of the present invention. FIG. 3 shows the structure of a transmittance variable optical laminate according to another embodiment of the present invention, and FIGS. 4 and 5a and 5b show the laminated structures of smart windows according to one or more embodiments of the present invention.

Referring to FIG. 1, a transmittance variable optical laminate according to an embodiment of the present invention may include a first laminate 100, a second laminate 200, and a liquid crystal layer 300, wherein the first laminate 100 may include a first polarizing plate 110-1, a column spacer 150, a first transparent conductive layer 210-1, and a first alignment film 310-1, and the second laminate 200 may include a second polarizing plate 110-2, a second transparent conductive layer 210-2, and a second alignment film 310-2.

The polarizing plate 110 includes a polarizer, and may include a stretched polarizer or be provided as a stretched polarizing plate. In one embodiment, the stretched polarizer may include a stretched polyvinyl alcohol (PVA)-based resin. The polyvinyl alcohol (PVA)-based resin may be a polyvinyl alcohol-based resin obtained by saponifying a polyvinyl acetate-based resin. Examples of the polyvinyl acetate-based resin include polyvinyl acetate, which is a homopolymer of vinyl acetate, as well as copolymers of vinyl acetate and other monomers copolymerizable therewith. Examples of the other monomers include unsaturated carboxylic acid-based monomers, unsaturated sulfonic acid-based monomers, olefin-based monomers, vinyl ether-based monomers, acrylamide-based monomers having an ammonium group, and the like. In addition, the polyvinyl alcohol (PVA)-based resin may include a modified resin, for example, aldehyde-modified polyvinyl formal or polyvinyl acetal.

In addition, the polarizing plate 110 may include a coated polarizer. In one embodiment, the coated polarizer may be formed by a liquid crystal coating composition, and for example, may be formed by applying the liquid crystal coating composition to the upper surface of the protective layer. Here, the liquid crystal coating composition may include a reactive liquid crystal compound and a dichroic dye.

The reactive liquid crystal compound may include a reactive mesogen (RM) capable of exhibiting liquid crystal properties, and/or a monomer molecule including a polymerizable terminal functional group and having a liquid crystal phase after a crosslinking reaction by heat or light. The reactive liquid crystal compound may be polymerized by light or heat to form a polymer network while maintaining the liquid crystal alignment. By using the reactive liquid crystal compound, it is possible to form a thin-film polarizer having improved mechanical and thermal stability while maintaining the optical anisotropy and dielectric constant characteristics of the liquid crystal.

The dichroic dye is a component included in the liquid crystal coating composition to impart polarization properties, and has different absorbances in the major and minor axis directions of the molecule. The dichroic dye may be a conventional or later-developed dichroic dye, and examples thereof include acridine dyes, oxazine dyes, cyanine dyes, naphthalene dyes, azo dyes, anthraquinone dyes, etc., which may be used alone or in combination.

The liquid crystal coating composition may further include a solvent capable of dissolving the reactive liquid crystal compound and the dichroic dye, and examples of the solvent include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The polarizing plate 110 may include a curved shape to manufacture an optical laminate having a curved surface, and for example, may be formed in a shape curved toward any one of the two different polarizing plates 110 laminated on both sides of the liquid crystal layer 300.

It is preferable that the transmission axis of the first polarizing plate 110-1 and the transmission axis of the second polarizing plate 110-2 are arranged perpendicular to each other in the plane direction. In this case, there may be an advantage of improving the range of transmittance variation between the light transmission mode and the light-blocking mode of the optical laminate according to liquid crystal driving.

In one or more embodiments, at least one polarizing plate 110 among the first polarizing plate 110-1 and the second polarizing plate 110-2 may further include at least one functional layer selected from the group consisting of a protective layer, a retardation matching layer, and a refractive index-matching layer.

The protective layer 120 serves to protect the polarization characteristics of the polarizing plate from post-processing and external environments, and may be provided in the form of a protective film, etc.

The protective layer may also have a multi-layer structure in which one or more protective layers are continuously laminated, and may be used in combination with other functional layer(s).

In one or more embodiments, the protective layer 120 may include at least one selected from the group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene(PP), polymethyl acrylate (PMA), polymethyl methacrylate (PMMA), polyethyl acrylate (PEA), polyethyl methacrylate (PEMA), and a cyclic olefin polymer (COP).

The retardation matching layer is intended to match the optical properties of the optical laminate, may be in the form of a retardation film or the like, and may be a conventional or later-developed retardation film. For example, quarter-wave plates or half-wave plates may be used to retard the phase of light, and these may be used alone or in combination.

The retardation matching layer may be used alone or in combination with other functional layer(s).

The retardation matching layer may include either a stretched polymer film obtained by stretching a polymer film capable of imparting optical anisotropy in an appropriate manner, or a liquid crystal polymer film.

In one embodiment, the stretched polymer film may include a polymer layer including a polyolefin such as polyethylene (PE) or polypropylene (PP), a cyclic olefin polymer (COP) such as polynorbornene, a polyester such as polyvinyl chloride (PVC), polyacrylonitrile (PAN), polysulfone (PSU), acrylic resin, polycarbonate (PC), or polyethylene terephthalate(PET), a cellulose acetate-based polymer such as polyacrylate, polyvinyl alcohol (PVA) or triacetyl cellulose (TAC), or a copolymer of two or more monomers among the monomers forming the polymers.

The method of obtaining the stretched polymer film is not particularly limited, and for example, the stretched polymer film may be obtained by forming the polymer material into a film form, followed by stretching. The method for forming the polymer material into a film form is not particularly limited, and the polymer material may be formed into a film by a known method such as injection molding, sheet molding, blow molding, injection blow molding, inflation molding, extrusion molding, foam molding, cast molding, or the like. In addition, a secondary processing molding method such as pressure molding or vacuum molding may also be used. Thereamong, extrusion molding or cast molding is preferably used. In this case, for example, an unstretched film may be extrusion-molded using an extruder equipped with a T-die, a circular die, or the like. When a molded product is obtained by extrusion molding, a material prepared by melt-kneading various resin components, additives, etc. may be used and the molded product may be formed by melt-kneading during extrusion molding. Furthermore, after various resin components are dissolved using a common solvent, for example, a solvent such as chloroform or methylene chloride, an unstretched film may be cast-molded by cast drying and solidification.

The stretched polymer film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method of tenter stretching, a biaxial stretching method of tubular stretching, or the like.

The liquid crystal polymer film may include a reactive liquid crystal compound in a polymerized state. The above description of the reactive liquid crystal compound of the coated polarizer may be equally applied to the reactive liquid crystal compound.

In one or more embodiments, the thickness of the retardation matching layer may be 10 µm to 100 µm in the case of the stretched polymer film, and 0.1 µm to 5 µm in the case of the liquid crystal polymer film.

The refractive index-matching layer is provided to compensate for the refractive index difference of the optical laminate caused by the transparent conductive layer 210, and may serve to improve the viewing characteristics, etc. by reducing the refractive index difference. Furthermore, the refractive index-matching layer may be provided to correct the color caused by the transparent conductive layer 210. Meanwhile, when the transparent conductive layer has a pattern, the refractive index matching layer may compensate for the difference in transmittance between a pattern region with the pattern formed and a non-pattern region where no pattern is formed.

Specifically, the transparent conductive layer 210 is laminated adjacent to other members having a refractive index different therefrom, and the difference in the refractive index between the transparent conductive layer and other layer adjacent thereto may lead to the difference in light transmittance. In particular, if a pattern is formed on the transparent conductive layer, a problem may arise in that the pattern region and the non-pattern region are viewed to be distinguishable from each other. Therefore, the refractive index-matching layer is included to compensate for refractive index, thereby reducing the difference in light transmittance of the optical laminate. In particular, when a pattern is formed on the transparent conductive layer, the refractive index-matching layer prevents the pattern region and the non-pattern region from being viewed to be distinguishable from each other.

In one embodiment, the refractive index of the refractive index-matching layer may be appropriately selected depending on the material of another adjacent member, but is preferably 1.4 to 2.6, more preferably 1.4 to 2.4. In this case, it is possible to prevent light loss caused by a sharp difference in refractive index between the transparent conductive layer 210 and other members.

The refractive index-matching layer is not particularly limited as long as it can prevent the sharp difference in refractive index between the transparent conductive layer 210 and other members, and it may include a compound used in the formation of a conventional or later-developed refractive index matching layers. For example, the refractive index matching layer may be formed from a refractive index-matching layer formation composition including a polymerizable isocyanurate compound.

In one embodiment, the polarizing plate 110 may further include other functional layers to assist or enhance the characteristics of the polarizing plate, in addition to the above-mentioned functional layers and, for example, may further include an overcoat layer, etc. in order to further improve the mechanical durability.

In one or more embodiments, the polarizing plate 110 may have a thickness of 30 to 200 µm, preferably 30 to 170 µm, more preferably 50 to 150 µm. In this case, the polarizing plate 110 makes it possible to manufacture an optical laminate having a small thickness while maintaining optical properties.

The optical laminate of the present invention may include at least one column spacer 150 on one surface of the first polarizing plate 110-1.

The column spacer 150 serves to maintain a constant liquid crystal cell gap by supporting the second laminate 200, and may secure a space for the liquid crystal layer 300 between the first laminate 100 and the second laminate 200, so that the liquid crystal compound 350 may be sufficiently injected. In addition, by including a plurality of column spacers 150, a liquid crystal layer 300 with a uniform thickness may be provided. This eliminates the need to add separate ball spacers, thereby preventing the problem that the ball spacers clump together and the liquid crystal alignment is disturbed by the ball spacers, and also preventing the occurrence of poor adhesion due to the ball spacers flowing into a sealant 450 during sealing, which results in liquid crystal defects.

In addition, since a transparent conductive layer 210-1 described later is laminated on the column spacer 150, and thus the first alignment film 310-1 is not directly coated on the column spacer 150, it is possible to prevent a problem of defective spacer shape caused by deformation of the spacer resin due to penetration of the coating liquid composition when coating with the first alignment film 310-1.

In addition, since the transparent conductive layer 210-1 described below is laminated on the column spacer 150 and is coated with the first alignment film 310-1, there is no concern that a short circuit current may occur between the transparent conductive layer and the alignment film due to any residual film that may not be completely removed after formation of the column spacer 150.

In addition, since the first alignment film 310-1 is formed after forming the column spacer 150, it is possible to prevent defects from occurring due to changes in the alignment performance of the alignment film, which are caused by UV irradiation, etc. during the process of forming the column spacer 150.

The inclination angle (a) formed by the tangent (p) of the lateral side (s) of the column spacer 150 with respect to the first polarizing plate 110-1 may be an acute angle.

The inclination angle (a) may be an acute angle in consideration of the thickness deviation of the transparent conductive layer 210-1 formed on the first polarizing plate 110-1 and the column spacer 150, and is preferably 70° or less, more preferably 20 to 70°, most preferably 30 to 60°. The transparent conductive layer 210-1 described below, which is formed on the first polarizing plate 110-1 having the column spacer 150 formed thereon, may be formed by a process of depositing, printing, or plating a transparent conductive oxide having a visible light transmittance of 50% or more. However, if the inclination angle (a) does not satisfy the above range, there is a problem in uniformly forming the transparent conductive layer 210-1, and thus there is a concern that afterimages may occur when the light transmission mode and light-blocking mode of the optical laminate are switched according to liquid crystal driving. For example, if the inclination angle (a) is a right angle or an obtuse angle, a portion of the transparent conductive layer 210-1 may not be formed on the lateral side (s) of the column spacer 150 or the transparent conductive layer 210-1 may not be formed uniformly thereon. If a portion of the transparent conductive layer 210-1 is not formed on the lateral side (s) of the column spacer 150, a short circuit may occur in the transparent conductive layer, which may cause a defect when the liquid crystal is driven, and if the transparent conductive layer 210-1 is not formed uniformly, a problem may arise in that afterimages occur when the liquid crystal is driven, depending on the difference in response speed.

The shape of the column spacer 150 is not particularly limited as long as the inclination angle (a) formed by the tangent (p) of the lateral side (s) with respect to the first polarizing plate 110-1 is an acute angle. For example, the shape may be a cylindrical shape, a polygonal columnar shape, a cone shape, a polygonal pyramidal shape, a hemisphere shape, a mesh shape, or any other shape.

Since the inclination angle (a) of the column spacer 150 is an acute angle, the longitudinal cross-section of the column spacer 150 may have a shape as shown in FIG. 2, without being limited thereto. Although FIG. 2 illustrates that the lateral side (s) of the column spacer 150 is straight in shape, the shape of the lateral side (s) may be, without particular limitation, any shape that can achieve the desired technical effect of the present invention, and may be, for example, a curved shape or a stepped shape.

That is, the width of the column spacer 150 may become narrower as it goes upward from the portion that contacts the first polarizing plate 110-1. Considering the process rationalization during spacer formation and the size that can minimize the external visibility in the transmission mode, assuming that the portion that contacts the first polarizing plate 110-1 is the bottom of the column spacer, the width (d) of the top of the column spacer, which is opposite thereto, may be 4 to 60 µm.

In addition, the height (h) of the column spacer 150 may be 2 to 10 µm. If the height (h) of the column spacer (150) is less than 2 µm, a phenomenon may occur in which the liquid crystals are greatly affected by surface anchoring energy on the substrate, and thus twisting of the liquid crystals by voltage application does not occur. In addition, if the height (h) of the column spacer 150 is more than 10 µm, a problem may arise in that light leakage occurs depending on the viewing angle characteristics.

If the number of column spacers 150 is small, the liquid crystal cell gap of some regions of the liquid crystal layer may decrease, and thus the some regions are visible by the user as black amorphous spots. If the number of column spacers 150 is large, the transmittance (%) may decrease when no voltage is applied. Considering this, the area of the top of the column spacers 150 may be 0.2 to 5.0% of the area of the second polarizing plate 110-2.

The column spacer 150 may be formed by applying a photosensitive resin composition onto the first polarizing plate 110-1, drying the composition to form a coating layer, and then exposing and developing the coating layer to form a pattern of the column spacer 150.

The application process may be performed by a coating method or a printing process, such as roll coating, spin coating, slit coating, inkjet printing, etc.

The photosensitive resin composition for the column spacer 150 may include a binder resin, a photopolymerizable compound, a photopolymerization initiator, and a solvent.

The binder resin is a component that provides solubility in an alkaline developer used in the development process, and any binder resin that is soluble in an alkaline developer may be used without limitation. The binder resin has solubility in an alkaline developer used in the development process when forming the pattern, and in order to improve low-temperature curing characteristics, the binder resin may be produced by copolymerizing an ethylenically unsaturated monomer having a carboxyl group, or by polymerizing an ethylenically unsaturated monomer having a carboxyl group and a copolymerizable unsaturated monomer.

Specific examples of the ethylenically unsaturated monomer having a carboxyl group include monocarboxylic acids such as acrylic acid, methacrylic acid, and crotonic acid; dicarboxylic acids such as fumaric acid, mesaconic acid, and itaconic acid; and anhydrides of the above dicarboxylic acids; and mono(meth)acrylates of polymers having a carboxyl group and a hydroxyl group at both ends, such as ω-carboxypolycaprolactone mono(meth)acrylate, and acrylic acid and methacrylic acid are preferable.

Specific examples of the copolymerizable unsaturated monomer include, but are not limited to:
glycidyl methacrylate, an unsaturated monomer having a glycidyl group;
ethylenically unsaturated monomers having a hydroxyl group, such as hydroxyethyl (meth)acrylates, such as 2-hydroxyethyl (meth)acrylate, 2-hydroxypropyl (meth)acrylate, 4-hydroxybutyl (meth)acrylate, 2-hydroxy-3-phenoxypropyl (meth)acrylate, and N-hydroxyethyl acrylamide;
aromatic vinyl compounds such as styrene, vinyltoluene, α-methylstyrene, p-chlorostyrene, o-methoxystyrene, m-methoxystyrene, p-methoxystyrene, o-vinylbenzyl methyl ether, m-vinylbenzyl methyl ether, p-vinylbenzyl methyl ether, o-vinylbenzyl glycidyl ether, m-vinylbenzyl glycidyl ether, and p-vinylbenzyl glycidyl ether;
N-substituted maleimide-based compounds such as N-cyclohexylmaleimide, N-benzylmaleimide, N-phenylmaleimide, N-o-hydroxyphenylmaleimide, N-m-hydroxyphenylmaleimide, N-p-hydroxyphenylmaleimide, N-o-methylphenylmaleimide, N-m-methylphenylmaleimide, N-p-methylphenylmaleimide, N-o-methoxyphenylmaleimide, N-m-methoxyphenylmaleimide, and N-p-methoxyphenylmaleimide;
alkyl (meth)acrylates such as methyl (meth)acrylate, ethyl (meth)acrylate, n-propyl (meth)acrylate, i-propyl (meth)acrylate, n-butyl (meth)acrylate, i-butyl (meth)acrylate, sec-butyl (meth)acrylate, and t-butyl (meth)acrylate; alicyclic (meth)acrylates such as cyclopentyl (meth)acrylate, cyclohexyl (meth)acrylate, 2-methylcyclohexyl (meth)acrylate, tricyclo[5.2.1.0 2,6]decan-8-yl (meth)acrylate, 2-dicyclopentanyloxyethyl (meth)acrylate, and isobornyl (meth)acrylate;
aryl (meth)acrylates such as phenyl (meth)acrylate and benzyl (meth)acrylate;
unsaturated oxetane compounds such as 3-(methacryloyloxymethyl)oxetane, 3-(methacryloyloxymethyl)-3-ethyloxetane, 3-(methacryloyloxymethyl)-2-trifluoromethyloxetane, 3-(methacryloyloxymethyl)-2-phenyloxetane, 2-(methacryloyloxymethyl)oxetane, and 2-(methacryloyloxymethyl)-4-trifluoromethyloxetane.

The copolymerizable unsaturated monomers are preferably glycidyl methacrylate and tetrahydrofuryl methacrylate, which are unsaturated monomers having a glycidyl group.

The copolymerizable unsaturated monomers may be used alone or in combination of two or more.

The content of the binder resin is 3 to 40 wt%, preferably 3 to 20 wt%, based on the total weight of the photosensitive resin composition. When the content of the binder resin is within the above range, the solubility in the developer is sufficient, facilitating pattern formation, and preventing film reduction in the pixel portion of the exposed portion during development, thereby improving the omission property of the non-pixel portion, which is preferable.

In addition, in order to ensure the developability of the photosensitive resin composition, the acid value of the binder resin is preferably 30 to 150 mgKOH/g. If the acid value of the binder resin is less than 30 mgKOH/g, it is difficult for the photosensitive resin composition to ensure a sufficient development speed, and if the acid value is more than 150 mgKOH/g, the adhesion to the substrate is reduced, making it easy for pattern short-circuiting to occur.

The photopolymerizable compound is a compound that may be polymerized by the action of the photopolymerization initiator described below, and may include a monofunctional monomer, a difunctional monomer, or a polyfunctional monomer. Preferably, a polyfunctional monomer having two or more functionalities is used.

Specific examples of the monofunctional monomer include, but are not limited to, nonylphenylcarbitol acrylate, 2-hydroxy-3-phenoxypropyl acrylate, 2-ethylhexylcarbitol acrylate, 2-hydroxyethyl acrylate, or N-vinylpyrrolidone.

Specific examples of the bifunctional monomers include, but are not limited to, 1,6-hexanediol di(meth)acrylate, ethylene glycol di(meth)acrylate, neopentyl glycol di(meth)acrylate, triethylene glycol di(meth)acrylate, bis(acryloyloxyethyl)ether of bisphenol A, or 3-methylpentanediol di(meth)acrylate.

Specific examples of the above multifunctional monomer include, but are not limited to, trimethylolpropane tri(meth)acrylate, ethoxylated trimethylolpropane tri(meth)acrylate, propoxylated trimethylolpropane tri(meth)acrylate, pentaerythritol tri(meth)acrylate, pentaerythritol tetra(meth)acrylate, dipentaerythritol penta(meth)acrylate, dipentaerythritol hexaacrylate, ethoxylated dipentaerythritol hexa(meth)acrylate, propoxylated dipentaerythritol hexa(meth)acrylate, or dipentaerythritol hexa(meth)acrylate.

In addition, the photopolymerizable compound may be included in an amount of 5 to 50 wt%, preferably 7 to 45 wt%, more preferably 10 to 20 wt%, based on the total weight of the photosensitive resin composition. When the photopolymerizable compound is included in an amount within the above range, the strength and smoothness of the spacer are improved, which is preferable.

The photopolymerization initiator is a compound that generates radicals capable of initiating polymerization of the photopolymerizable compound upon exposure to radiation such as visible light, ultraviolet light, ultraviolet light, electron beams, or X-rays.

The photopolymerization initiator contains an oxime ester-based photopolymerization initiator as an essential component.

Examples of the oxime ester-based photopolymerization initiators include 2-O-benzoyloxime-1-[4-(phenylthio)phenyl]-1,2-octanedione, 1-[9-ethyl-6-(2-methylbenzoyl)-9H-carbazol-3-yl]ethanone 1-(O-acetyloxime), etc., and commercially available oxime ester-based photopolymerization initiators include Irgacure^{®} OXE 01, Irgacure^{®} OXE 02, and Irgacure^{®} OXE 03, manufactured by BASF. Since these photopolymerization initiators have different absorbances and generate different radical species, they are preferably used in combination of two or more.

In addition, a photopolymerization initiator other than the oxime ester-based photopolymerization initiator may be additionally used in combination. Typically, it is preferable to use at least one compound selected from the group consisting of acetophenone-based compounds, benzophenone-based compounds, triazine-based compounds, biimidazole-based compounds, and thioxanthone-based compounds.

Specific examples of the acetophenone-based compounds include diethoxyacetophenone, 2-hydroxy-2-methyl-1-phenylpropan-1-one, benzyldimethylketal, 2-hydroxy-1-[4-(2-hydroxyethoxy)phenyl]-2-methylpropan-1-one, 1-hydroxycyclohexylphenyl ketone, 2-methyl-1-(4-methylthiophenyl)-2-morpholinopropan-1-one, 2-benzyl-2-dimethylamino-1-(4-morpholinophenyl)butan-1-one, 2-hydroxy-2-methyl-1-[4-(1-methylvinyl)phenyl]propan-1-one, 2-(4-methylbenzyl)-2-(dimethylamino)-1-(4-morpholinophenyl)butan-1-one, etc.

Examples of the benzophenone-based compounds include benzophenone, 0-benzoylbenzoate methyl, 4-phenylbenzophenone, 4-benzoyl-4'-methyldiphenyl sulfide, 3,3',4,4'-tetra(tert-butylperoxycarbonyl)benzophenone, 2,4,6-trimethylbenzophenone, etc.

Specific examples of the triazine-based compounds include 2,4-bis(trichloromethyl)-6-(4-methoxyphenyl)-1,3,5-triazine, 2,4-bis(trichloromethyl)-6-(4-methoxynaphthyl)-1,3,5-triazine, 2,4-bis(trichloromethyl)-6-piperonyl-1,3,5-triazine, 2,4-bis(trichloromethyl)-6-(4-methoxystyryl)-1,3,5-triazine, 2,4-bis(trichloromethyl)-6-[2-(5-methylfuran-2-yl)ethenyl]-1,3,5-triazine, 2,4-bis(trichloromethyl)-6-[2-(furan-2-yl)ethenyl]-1,3,5-triazine, 2,4-bis(trichloromethyl)-6-[2-(4-diethylamino-2-methylphenyl)ethenyl]-1,3,5-triazine, 2,4-bis(trichloromethyl)-6-[2-(3,4-dimethoxyphenyl)ethenyl]-1,3,5-triazine, etc.

Specific examples of the biimidazole compounds include 2,2'-bis(2-chlorophenyl)-4,4',5,5'-tetraphenylbiimidazole, 2,2'-bis(2,3-dichlorophenyl)-4,4',5,5'-tetraphenylbiimidazole, 2,2'-bis(2-chlorophenyl)-4,4',5,5'-tetra(alkoxyphenyl)biimidazole, 2,2'-bis(2-chlorophenyl)-4,4',5,5'-tetra(trialkoxyphenyl)biimidazole, 2,2-bis(2,6-dichlorophenyl)-4,4',5,5'-tetraphenyl-1,2'-biimidazole, or an imidazole compound in which the phenyl group at the 4,4',5,5' position is substituted by a carboalkoxy group. Among them, 2,2'-bis(2-chlorophenyl)-4,4',5,5'-tetraphenylbiimidazole, 2,2'-bis(2,3-dichlorophenyl)-4,4',5,5'-tetraphenylbiimidazole, and 2,2-bis(2,6-dichlorophenyl)-4,4',5,5'-tetraphenyl-1,2'-biimidazole are preferably used.

Examples of the thioxanthone-based compounds include 2-isopropylthioxanthone, 2,4-diethylthioxanthone, 2,4-dichlorothioxanthone, 1-chloro-4-propoxythioxanthone, etc.

In addition, the photopolymerization initiator may further include a photopolymerization initiation aid in order to improve the sensitivity of the infrared ray-transmitting photosensitive resin composition. The infrared ray-transmitting photosensitive resin composition according to the present invention may have a further improved sensitivity by containing the photopolymerization initiation aid, thereby improving the productivity.

The photopolymerization initiation aid may preferably be, for example, at least one compound selected from the group consisting of an amine compound, a carboxylic acid compound, and a multifunctional thiol compound having a thiol group.

The amine compound is preferably an aromatic amine compound, and specific examples thereof include aliphatic amine compounds such as triethanolamine, methyldiethanolamine, and triisopropanolamine, methyl 4-dimethylaminobenzoate, ethyl 4-dimethylaminobenzoate, isoamyl 4-dimethylaminobenzoate, 2-ethylhexyl 4-dimethylaminobenzoate, 2-dimethylaminoethyl benzoate, N,N-dimethylparatoluidine, 4,4'-bis(dimethylamino)benzophenone (commonly known as Michler's ketone), 4,4'-bis(diethylamino)benzophenone, and the like.

The carboxylic acid compound is preferably an aromatic heteroacetic acid, and specific examples thereof include phenylthioacetic acid, methylphenylthioacetic acid, ethylphenylthioacetic acid, methylethylphenylthioacetic acid, dimethylphenylthioacetic acid, methoxyphenylthioacetic acid, dimethoxyphenylthioacetic acid, chlorophenylthioacetic acid, dichlorophenylthioacetic acid, N-phenylglycine, phenoxyacetic acid, naphthylthioacetic acid, N-naphthylglycine, naphthoxyacetic acid, and the like.

Examples of the polyfunctional thiol compounds having a thiol group include 2-mercaptobenzothiazole, 1,4-bis(3-mercaptobutyryloxy)butane, 1,3,5-tris(3-mercaptobutyloxyethyl)-1,3,5-triazine-2,4,6(1H,3H,5H)-trione, trimethylolpropane tris(3-mercaptopropionate), pentaerythritol tetrakis(3-mercaptobutyrate), pentaerythritol tetrakis(3-mercaptopropionate), dipentaerythritol hexakis(3-mercaptopropionate), tetraethylene glycol bis(3-mercaptopropionate), etc.

In addition, the photopolymerization initiator may further include a photopolymerization initiation aid in order to improve the sensitivity of the photosensitive resin composition. By containing the photopolymerization initiation aid, the photosensitive resin composition may have a further increased sensitivity, thereby improving productivity.

The photopolymerization initiation aid may preferably be, for example, at least one compound selected from the group consisting of an amine compound, a carboxylic acid compound, and a multifunctional thiol compound.

The amine compound is preferably an aromatic amine compound, and specific examples thereof include aliphatic amine compounds such as triethanolamine, methyldiethanolamine, and triisopropanolamine, methyl 4-dimethylaminobenzoate, ethyl 4-dimethylaminobenzoate, isoamyl 4-dimethylaminobenzoate, 2-ethylhexyl 4-dimethylaminobenzoate, 2-dimethylaminoethyl benzoate, N,N-dimethylparatoluidine, 4,4'-bis(dimethylamino)benzophenone (commonly known as Michler's ketone), 4,4'-bis(diethylamino)benzophenone, and the like.

The carboxylic acid compound is preferably an aromatic heteroacetic acid, and specific examples thereof include phenylthioacetic acid, methylphenylthioacetic acid, ethylphenylthioacetic acid, methylethylphenylthioacetic acid, dimethylphenylthioacetic acid, methoxyphenylthioacetic acid, dimethoxyphenylthioacetic acid, chlorophenylthioacetic acid, dichlorophenylthioacetic acid, N-phenylglycine, phenoxyacetic acid, naphthylthioacetic acid, N-naphthylglycine, naphthoxyacetic acid, and the like.

Examples of the multifunctional thiol compound include tris-[(3-mercaptopropionyloxy)-ethyl]-isocyanurate, trimethylolpropane tris-3-mercaptopropionate), pentaerythritol tetrakis-3-mercaptopropionate, dipentaerythritol hexa-3-mercaptopropionate, etc.

The photopolymerization initiator may be included in an amount of 1 to 20 wt%, preferably 1 to 10 wt%, based on the total weight of the photosensitive resin composition. When the photopolymerization initiator is included in an amount within the above range, the photosensitive resin composition becomes highly sensitive, which shortens the exposure time, thereby improving productivity, which is preferable. In addition, the strength of the spacer formed using the composition satisfying under the above-described conditions and the smoothness on the surface of the spacer may be improved. In addition, the oxime ester-based photopolymerization initiator should be included in an amount of 10 to 100 wt%, preferably 20 to 100 wt%, based on the total weight of the photopolymerization initiator. If the proportion of the oxime ester-based photopolymerization initiator relative to the total weight of the photopolymerization initiator is less than 10 wt%, the reduction in sensitivity due to dyes cannot be overcome, and pattern short-circuiting is likely to occur during the developing process.

In addition, when the photopolymerization initiation aid is further used, the photopolymerization initiation aid may be included in an amount of 0.1 to 40 parts by weight, preferably 1 to 30 parts by weight, on a solid basis, based on 100 parts by weight of the sum of the binder resin and the photopolymerizable compound. When the amount of the photopolymerization initiation aid used is within the range of 0.1 to 40 parts by weight described above, the sensitivity of the photosensitive resin composition is further increased, and the productivity of the spacer formed using the composition is improved.

The solvent used for the binder resin may be any solvent effective in dissolving other components included in the photosensitive resin composition, but an organic solvent having a boiling point of 100°C to 200°C is preferable in terms of applicability and drying properties. More preferably, the solvent may be propylene glycol monomethyl ether acetate, propylene glycol monoethyl ether acetate, cyclohexanone, ethyl lactate, butalactate, ethyl 3-ethoxypropionate, methyl 3-methoxypropionate, etc. Furthermore, the solvent is preferably propylene glycol monomethyl ether acetate and/or 4-hydroxy-4-methyl-2-pentanone.

In combination with the above-described solvent, a solvent used in a conventional photosensitive resin composition, which is effective in dissolving other components included in the photosensitive resin composition, may be used. In particular, ethers, aromatic hydrocarbons, ketones, alcohols, esters or amides are preferable.

Specific examples of such solvents include: ethylene glycol monoalkyl ethers such as ethylene glycol monomethyl ether, ethylene glycol monoethyl ether, ethylene glycol monopropyl ether, and ethylene glycol monobutyl ether; diethylene glycol dialkyl ethers such as diethylene glycol dimethyl ether, diethylene glycol diethyl ether, diethylene glycol dipropyl ether, and diethylene glycol dibutyl ether; ethylene glycol alkyl ether acetates such as methyl cellosolve acetate and ethyl cellosolve acetate;

alkylene glycol alkyl ether acetates such as propylene glycol monoethyl ether acetate, propylene glycol monopropyl ether acetate, methoxybutyl acetate, and methoxypentyl acetate; aromatic hydrocarbons such as benzene, toluene, xylene, and mesitylene; ketones such as methyl ethyl ketone, acetone, methyl amyl ketone, methyl isobutyl ketone, and cyclohexanone; alcohols such as ethanol, propanol, butanol, hexanol, cyclohexanol, ethylene glycol, and glycerin; esters such as ethyl 3-ethoxypropionate and methyl 3-methoxypropionate; cyclic esters such as γ-butyrolactone.

The solvent may be included in an amount of 60 to 90 wt%, preferably 70 to 85 wt%, based on the total weight of the photosensitive resin composition. When the solvent is included in an amount within the range of 60 to 90 wt% as described above, it provides an effect of improving the coatability when applying the photosensitive resin composition using a coating device such as a roll coater, a spin coater, a slit-and-spin coater, a slit coater (sometimes also called a die coater), or an inkjet coater.

In addition to the above components, the photosensitive resin composition of the present invention may also contain additives such as antioxidants, fillers, other polymer compounds, curing agents, adhesion promoters, UV absorbers, and anticoagulants, according to the needs of those skilled in the art, within a range that does not impair the purpose of the present invention.

Commercially available antioxidants include ADK STAB AO-30, ADK STAB AO-40, ADK STAB AO-50F, ADK STAB AO-60, ADK STAB AO-80, ADK STAB 1178, ADK STAB TPP, ADK STAB 1500, ADK STAB 135A, and ADK STAB 3010, which are commercially available from Adeka.

Specific examples of the filler include, but are not limited to, glass, silica, alumina, etc..

Specific examples of the other polymer compounds include, but are not limited to, curable resins such as epoxy resins and maleimide resins, and thermoplastic resins such as polyvinyl alcohol, polyacrylic acid, polyethylene glycol monoalkyl ether, polyfluoroalkyl acrylate, polyester, and polyurethane.

The curing agent is used to promote deep curing and increase mechanical strength, and specific examples thereof include, but are not limited to, an epoxy compound, a polyfunctional isocyanate compound, a melamine compound, an oxetane compound, etc. Specific examples of the epoxy compound include, but are not limited to, bisphenol A epoxy resin, hydrogenated bisphenol A epoxy resin, bisphenol F epoxy resin, hydrogenated bisphenol F epoxy resin, novolak-type epoxy resin, other aromatic epoxy resins, alicyclic epoxy resin, glycidyl ester resin, glycidyl amine resin, or brominated derivatives of these epoxy resins, aliphatic, alicyclic or aromatic epoxy compounds other than epoxy resins and brominated derivatives thereof, butadiene (co)polymer epoxide, isoprene (co)polymer epoxide, glycidyl (meth)acrylate (co)polymers, triglycidyl isocyanurate, and the like. Examples of the oxetane compound include, but are not limited to, carbonate bisoxetane, xylene bisoxetane, adipate bisoxetane, terephthalate bisoxetane, cyclohexane dicarboxylic acid bisoxetane, etc.

The curing agent may be used in combination with a curing auxiliary compound capable of ring-opening and polymerizing the epoxy group of the epoxy compound and the oxetane skeleton of the oxetane compound together with the curing agent. Specific examples of the curing auxiliary compound include polycarboxylic acids, polycarboxylic anhydrides, acid generators, etc. The carboxylic anhydrides may be those commercially available as epoxy resin curing agents. Examples of the commercially available epoxy resin curing agents include product name ADEKAHADONA EH-700) (manufactured by ADEKA Kogyo Co., Ltd.), product name RIKASHIDO HH (manufactured by Shin Nippon Chemical Co., Ltd.), and product name MH-700 (manufactured by Shin Nippon Chemical Co., Ltd.).

The curing agents and curing auxiliary compounds exemplified above may be used alone or in combination of two or more.

The adhesion promoter may specifically be one or a mixture of two or more selected from the group consisting of vinyltrimethoxysilane, vinyltriethoxysilane, vinyltris(2-methoxyethoxy)silane, N-(2-aminoethyl)-3-aminopropylmethyldimethoxysilane, N-(2-aminoethyl)-3-aminopropyltrimethoxysilane, 3-aminopropyltriethoxysilane, 3-glycidoxypropyltrimethoxysilane, 3-glycidoxypropylmethyldimethoxysilane, 2-(3,4-epoxycyclohexyl)ethyltrimethoxysilane, 3-chloropropylmethyldimethoxysilane, 3-chloropropyltrimethoxysilane, 3-methacryloxypropyltrimethoxysilane, 3-mercaptopropyltrimethoxysilane, 3-isocyanatepropyltrimethoxysilane, and 3-isocyanatepropyltriethoxysilane.

Specific examples of the UV absorber include, but are not limited to, 2-(3-tert-butyl-2-hydroxy-5-methylphenyl)-5-chlorobenzothiazole, alkoxybenzophenone, etc.

Specific examples of the anti-coagulant include, but are not limited to, sodium polyacrylate.

The additives are preferably included in an amount of 0.01 to 20 wt%, preferably 0.1 to 10 wt%, based on the total weight of the photosensitive resin composition.

The exposure process may include ultraviolet exposure (e.g., using a g-line, h-line, i-line, or KrF light source) using a mask that selectively exposes the pixel area, and a refractive element.

'The refractive element is disposed between the mask and the light source to change the direction of light from the light source. The refractive element may be a prism. According to Snell's law, the exit angle of the light is adjustable with respect to the incident angle of the light, and when the refractive element for determining the refractive index and the material of the photosensitive resin are selected, the inclination angle (a) of the refractive element is adjusted.

Thereafter, the pattern having the desired pattern shape may be formed by selectively removing the unexposed area or the exposed area using a developer. That is, if the photosensitive resin composition for forming the column spacer 150 is a positive photoresist layer, the exposed photoresist is removed to obtain a transferred pattern having a predetermined inclination angle (a), and conversely, if the photosensitive resin composition is a negative photoresist layer, the exposed photoresist is strengthened by cross-linking, so that the unexposed photoresist is removed to form a transferred pattern having a predetermined inclination angle (a).

The developer may include, for example, an inorganic or organic alkaline compound. Examples of the inorganic alkaline compound include sodium hydroxide, potassium hydroxide, disodium hydrogen phosphate, sodium dihydrogen phosphate, diammonium hydrogen phosphate, ammonium dihydrogen phosphate, potassium dihydrogen phosphate, sodium silicate, potassium silicate, sodium carbonate, potassium carbonate, sodium bicarbonate, potassium bicarbonate, sodium borate, potassium borate, ammonia, and the like. Examples of the organic alkaline compound include tetramethylammonium hydroxide, 2-hydroxyethyltrimethylammonium hydroxide, monomethylamine, dimethylamine, trimethylamine, monoethylamine, diethylamine, triethylamine, monoisopropylamine, diisopropylamine, ethanolamine, and the like. These compounds may be used alone or in combination of two or more.

After the development process, the column spacer 150 pattern may be more firmly cured through an additional heating and curing process (post-baking or post-firing). At this time, the heating temperature may be 90 to 180°C, and the heating time may be 5 to 180 minutes, preferably 15 to 90 minutes, without being limited thereto.

In the case of the transmittance variable optical laminate of the present invention, as shown in the attached drawings, the column spacer 150 may be formed in the first laminate 100, and the column spacer may also be formed in the second laminate 200. When the second laminate 200 also includes the column spacer, the position of the column spacer is not particularly limited, and the column spacer may be formed in a position opposite to the column spacer 150 so as to be in contact therewith, or it may be positioned in a portion of the first laminate 100 where the column spacer 150 is not formed so as to be misaligned with the column spacer 150.

As such, the present invention may provide a transmittance variable optical laminate that, by including the column spacer 150, may prevent deformation of the column spacer and the occurrence of iquid crystal defects, and thus has excellent reliability for liquid crystal driving.

The transparent conductive layer 210 is provided for driving the liquid crystal layer 300. For example, as shown in FIG. 1, the first transparent conductive layer 210-1 may be formed on and in direct contact with the first polarizing plate 110-1 having the column spacer 150 formed thereon, and the transparent conductive layer 210-2 may be formed on and in direct contact with the second polarizing plate 110-2 on which the column spacer 150 is not formed.

Conventionally, an optical laminate used to manufacture a smart window, etc. is manufactured by forming a conductive layer for driving liquid crystals on one surface of a substrate and bonding the other surface of the substrate to a polarizing plate. However, the transmittance variable optical laminate according to the present invention is characterized in that, since the conductive layer is directly formed on one surface of the polarizing plate without including a separate substrate for forming the conductive layer, the laminate has improved transmittance in a light transmission mode and improved flexural properties while having a reduced thickness.

In one embodiment, the transparent conductive layer 210 may be formed by direct deposition on the first polarizing plate 110-1 having the column spacer 150 formed thereon and the second polarizing plate 110-2. In this case, the transparent conductive layer 210 may be formed in direct contact with a pretreated surface of each of the polarizing plate 110 and the column spacer 150 after performing pre-treatment such as corona treatment or plasma treatment on one surface of each of the polarizing plate 110 and the column spacer 150 in order to improve the adhesion thereof to the polarizing plate 110 and the column spacer 150. The pre-treatment is not limited to corona treatment or plasma treatment, and may be performed using any conventional or later-developed pre-treatment process within a range that does not impair the purpose of the present invention.

In another embodiment, the transparent conductive layer 210 may be formed on the polarizing plate 110 and the column spacer 150 via a highly adhesive layer (not shown) provided on one surface of each of the polarizing plate 110 and the column spacer 150, in order to improve the adhesion of the transparent conductive layer 210 to the polarizing plate 110 and the column spacer 150.

The transparent conductive layer 210 preferably has a visible light transmittance of 50% or more, and for example, may include at least one selected from the group consisting of a transparent conductive oxide, a metal, a carbonaceous material, a conductive polymer, a conductive ink, and nanowires, without being limited thereto, and a conventional or later-developed transparent conductive layer material may be used.

In one or more embodiments, the transparent conductive oxide may include at least one selected from the group consisting of indium tin oxide (ITO), indium zinc oxide (IZO), indium zinc tin oxide (IZTO), aluminum zinc oxide (AZO), gallium zinc oxide (GZO), fluorine tin oxide (FTO), and zinc oxide (ZnO). In addition, the metal may include at least one selected from the group consisting of gold (Au), silver (Ag), copper (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), and an alloy containing at least one of these metals, and may include, for example, a silver-palladium-copper (APC) alloy or a copper-calcium (CuCa) alloy. The carbonaceous material may include at least one selected from the group consisting of carbon nanotubes (CNTs), graphene, and the like. The conductive polymer may include at least one selected from the group consisting of polypyrrole, polythiophene, polyacetylene, PEDOT, and polyaniline. The conductive ink may be an ink composed of a mixture of metal powder and a curable polymeric binder, and the nanowires may be, for example, silver nanowires (AgNWs).

Furthermore, the transparent conductive layer 210 may be formed to have a structure consisting of two or more layers by combining the above-described materials. For example, in order to reduce the reflectivity of incident light and increase the transmittance, the transparent conductive layer may be formed to have a two-layer structure including a metal layer and a transparent conductive oxide layer.

The transparent conductive layer 210 may be formed by a method commonly used in art. For example, it may be formed by an appropriate process selected from coating processes such as spin coating, roller coating, bar coating, dip coating, gravure coating, curtain coating, die coating, spray coating, doctor blade coating, and kneader coating processes; printing processes such as screen printing, spray printing, inkjet printing, relief printing, intaglio printing, and flat printing processes; and deposition processes such as a chemical vapor deposition (CVD), physical vapor deposition (PVD), and plasma-enhanced chemical vapor deposition (PECVD), etc.

The alignment film 310 may be formed on the transparent conductive layer 210 and is not particularly limited as long as it serves to align the liquid crystal compound 350. For example, the alignment film 310 may be formed by applying and curing an alignment film coating composition containing an alignable polymer, a photopolymerization initiator, and a solvent. The alignable polymer is not particularly limited, but may be a polyacrylate-based resin, a polyamic acid resin, a polyimide-based resin, a polymer containing a cinnamate group, or the like. In addition, a conventional or later-developed polymer capable of exhibiting alignment properties may be used.

The first alignment film 310-1 is formed along the shape of the column spacer 150, and thus may have a portion that comes into contact with the second alignment film 310-2, but is not necessarily adhered to the second alignment film. That is, the first alignment film 310-1 and the second alignment film 310-2 may or may not be in contact with each other, and the liquid crystal compound 350 described later may move between them.

At least one of the first alignment film 310-1 and the second alignment film 310-2 may have a thickness of 30 to 300 nm. If the thickness of the alignment film 310 is less than 30 nm, a short circuit current may occur, and if the thickness is more than 300 nm, an appropriate pretilt angle may not be obtained when voltage is applied, which may cause a slow response speed and problems such as liquid crystal spot defects due to unsatisfied frontal black, as well as visible afterimages.

The liquid crystal layer 300 may change the driving mode of the optical laminate by controlling the transmittance of light incident in one or more directions, depending on an electric field.

The liquid crystal layer 300 may include the liquid crystal compound 350, and for example, it may be positioned in a space provided between the first polarizing plate 110-1 and the second polarizing plate 110-2 in the light control region and provided by formation of the column spacer 150. The liquid crystal layer 300 is disposed between the first laminate 100 and the second laminate 200, and may be disposed between the first alignment film 310-1 and the second alignment film 310-2. In this case, the first alignment film 310-1 and the second alignment film 310-2 may or may not be in contact with each other due to the shape of the column spacer (150), and are preferably in contact with each other in order to maintain a uniform cell gap.

The liquid crystal compound 350 is not particularly limited as long as it is driven in response to an electric field and is capable of controlling the light transmittance, and a conventional or later-developed liquid crystal compound 350 may be used. For example, the contents regarding the reactive liquid crystal compound 350 of the above-described coated polarizer may be equally applied.

The liquid crystal driving mode of the liquid crystal compound 350 is not particularly limited, and for example, the liquid crystal compound may be driven in a twisted nematic (TN) mode as shown in FIG. 1 or the like, without being limited thereto, and may also be driven in a super-twisted nematic (STN) mode, a vertical alignment (VA) mode, etc.

In one embodiment, the liquid crystal layer 300 may be driven in a twisted nematic (TN) mode. In this case, there are advantages in that it is possible to increase the range of transmittance variation between the light transmission mode and the light-blocking mode of the optical laminate through the optical design with the above-described polarizing plate 110 and it is easy to enlarge the optical laminate.

A sealant 450 may be positioned across the liquid crystal layer 300 and the alignment film 310.

The sealant 450 may include a curable resin as a base resin. As the base resin, a UV-curable resin or thermosetting resin known in the art to be usable for the sealant 450 may be used. The UV-curable resin may be a polymer of a UV-curable monomer. The thermosetting resin may be a polymer of a thermosetting monomer.

As the base resin of the sealant 450, for example, an acrylate-based resin, an epoxy-based resin, a urethane-based resin, a phenol-based resin, or a mixture of these resins may be used. In one embodiment, the base resin may be an acrylate-based resin, wherein the acrylate-based resin may be a polymer of an acrylic monomer. The acrylic monomer may be, for example, a multifunctional acrylate. In another embodiment, the sealant 450 may further include a monomer component in addition to the base resin. The monomer component may be, for example, a monofunctional acrylate. As used herein, the term "monofunctional acrylate" may mean a compound having one acrylic group, and the term "multifunctional acrylate" may mean a compound having two or more acrylic groups. The curable resin may be cured by UV irradiation and/or heating. The UV irradiation or heating may be appropriately performed under conditions that do not impair the purpose of the present application. If necessary, the sealant 450 may further include an initiator, for example, a photoinitiator or a thermal initiator

The sealant 450 may be formed by a method commonly used in the art, and for example, may be formed by drawing a sealant into the outer peripheral region (i.e., inactive region) of the liquid crystal layer using a dispenser having a nozzle.

The transmittance variable optical laminate of the present invention may further include other members within a range that does not impair the purpose of the present invention. For example, it may further include a pressure-sensitive adhesive layer 400 on one surface (see FIG. 3) or both surfaces (not shown) of the optical laminate, and may further include a UV-absorbing layer, a hard coating layer, etc.

The pressure-sensitive adhesive layer 400 may be formed using a pressure-sensitive adhesive or an adhesive, and preferably has an appropriate pressure-sensitive adhesive force so that peeling, bubbles, etc. do not occur during handling of the optical laminate, as well as transparency and thermal stability.

The pressure-sensitive adhesive may be a conventional or later-developed pressure-sensitive adhesive. In one or more embodiments, the pressure-sensitive adhesive may be an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, or the like. The pressure-sensitive adhesive is not particularly limited as long as it has adhesive and viscoelastic properties. However, the pressure-sensitive adhesive may preferably be an acrylic pressure-sensitive adhesive from the viewpoint of ease availability, etc., and may include, for example, a (meth)acrylate copolymer, a crosslinking agent, a solvent, and the like.

The crosslinking agent may be a conventional or later-developed crosslinking agent, and may include, for example, a polyisocyanate compound, an epoxy resin, a melamine resin, a urea resin, a dialdehyde, a methylol polymer, etc. Preferably, it may include a polyisocyanate compound.

The solvent may include a solvent commonly used in the field of resin compositions, and examples thereof include alcoholic compounds such as methanol, ethanol, isopropanol, butanol, and propylene glycol methoxy alcohol; ketone-based compounds such as methyl ethyl ketone, methyl butyl ketone, methyl isobutyl ketone, diethyl ketone, and dipropyl ketone; acetate-based compounds such as methyl acetate, ethyl acetate, butyl acetate, and propylene glycol methoxy acetate; cellosolve-based compounds such as methyl cellosolve, ethyl cellosolve, and propyl cellosolve; and hydrocarbon-based compounds such as hexane, heptane, benzene, toluene, and xylene. These solvents may be used alone or in combination of two or more.

The adhesive may be a conventional or later-developed adhesive, and for example, a photocurable adhesive may be used. The photocurable adhesive exhibits a strong adhesive force by being crosslinked and cured with active energy rays such as ultraviolet (UV) rays and electron beam (EB), and may be composed of a reactive oligomer, a reactive monomer, a photopolymerization initiator, etc. The reactive oligomer is an important component that determines the properties of the adhesive, and forms a cured coating film by forming a polymer bond through a photopolymerization reaction. Usable reactive oligomers include polyester-based resins, polyether-based resins, polyurethane-based resins, epoxy-based resins, polyacrylic resins, and silicone-based resins. The reactive monomer acts as a crosslinking agent and a diluent for the above-described reactive oligomer and affects the adhesive properties. Usable reactive monomers include monofunctional monomers, polyfunctional monomers, epoxy-based monomers, vinyl ethers, and cyclic ethers. The photopolymerization initiator acts to initiate photopolymerization by absorbing light energy to generate radicals or cations. An appropriate photopolymerization initiator selected depending on the photopolymerization resin may be used.

For example, for manufacturing of a smart window for a vehicle, it may be appropriate to use an adhesive layer material such as polyvinyl butyral (PVB) or ethylene vinyl acetate (EVA), or to coat with an optically clear resin (OCR) and then UV-cure the same for bonding, and for manufacturing of a smart window for a building, it may be appropriate to use a pressure-sensitive adhesive layer, without being limited thereto.

The thickness of the pressure-sensitive adhesive layer 400 may be appropriately determined depending on the type of resin acting as a pressure-sensitive adhesive, the pressure-sensitive adhesive strength, the environment in which the pressure-sensitive adhesive is used, etc. In one embodiment, the adhesive layer may have a thickness of 0.01 to 500 µm, preferably 0.05 to 450 µm, more preferably 1 to 400 µm, in order to ensure sufficient pressure-sensitive adhesive strength and minimize the thickness of the optical laminate. The thickness of the pressure-sensitive adhesive layer may be 2 to 30 µm, preferably 3 to 20 µm, more preferably 5 to 10 µm. In one embodiment, the pressure-sensitive adhesive layer 400 may be formed on one or both surfaces of the optical laminate by a lamination or vacuum bonding method.

The UV-absorbing layer is not particularly limited as long as it prevents UV-induced deterioration of the optical laminate. Examples of the UV absorber forming the UV-absorbing layer include salicylic acid-based UV absorbers (phenyl salicylate, p-tert-butyl salicylate, etc.), benzophenone-based UV absorbers (2,4-dihydroxybenzophenone, 2,2'-dihydroxy-4,4'-dimethoxybenzophenone, etc.), benzotriazole-based UV absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched-chain dodecyl)-4-methylphenol, a mixture of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, etc.), cyanoacrylate-based ultraviolet absorbers (2'-ethylhexyl-2-cyano-3,3-diphenyl acrylate, ethyl-2-cyano-3-(3',4'-methylenedioxyphenyl)-acrylate, etc.), triazine-based UV absorbers, and the like. Thereamong, a benzotriazole-based UV absorber or a triazine-based UV absorber, which has high transparency and an excellent effect of preventing deterioration of the polarizing plate or the transmittance variable layer, is preferable, and a benzotriazole-based UV absorber having a more appropriate spectral absorption spectrum is particularly preferable. The benzotriazole-based UV absorber may be a bis(benzotriazole) compound, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), or the like.

The hard coating layer is not particularly limited as long as it serves to protect members such as the polarizing plate and the transmittance variable layer from external physical or chemical impacts, and a conventional or later-developed hard coating layer may be used.

In one embodiment, the hard coating layer may be formed by applying a composition for forming a hard coating layer onto another member and then curing the same with light or heat. The composition for forming a hard coating layer is not particularly limited and may include, for example, a photocurable compound and a photoinitiator.

As the photocurable compound and the photoinitiator, those commonly used in the art may be used without limitation. For example, the photocurable compound may be a photopolymerizable monomer, a photopolymerizable oligomer, or the like, and examples thereof include monofunctional and/or polyfunctional (meth)acrylates. Examples of the photoinitiator include oxime esters, etc.

The present invention includes a method for manufacturing the above-described transmittance variable optical laminate. The method for manufacturing the transmittance variable optical laminate is not particularly limited, and the transmittance variable optical laminate may be manufactured using any bonding technique or the photolithography technique described above.

### <Smart Window>

The present invention includes, in addition to the above-described transmittance variable optical laminate, a smart window including the same. In addition, the present invention includes a means of transportation including the smart window, for example, an automobile in which the smart window is applied to at least one of a front window, a rear window, a side window, a sunroof window, and an interior partition, and a wearable device and a window for a building including the smart window.

For example, an automobile including the smart window of the present invention may include a smart window in which vehicle glass 500 is bonded to both sides of the optical laminate including the polarizing plate 110, the transparent conductive layer 210, the liquid crystal layer 300, and the pressure-sensitive adhesive layer 400 (see FIG. 4). The smart window may be manufactured by, for example, placing an adhesive film and vehicle glass on both sides of the optical laminate, followed by heating using a press machine at a temperature of 90°C under a vacuum of about 1 bar for 10 to 20 minutes, or may be manufactured by coating one surface of vehicle glass with a resin, and vacuum-bonding the vehicle glass to both surfaces of the optical laminate, followed by UV curing. The adhesive film may include an ethylene vinyl acetate (EVA) film, a poly vinyl butyral (PVB) film, or the like, and the resin may include an optically clear resin (OCR) having a storage modulus (G') of 10³ to 10⁵ Pa, or the like.

In addition, the smart window may be a product in which a window for a building (window glass) 600 is bonded to one surface (see FIG. 5a) or both surfaces (see FIG. 5b) of the optical laminate. Alternatively, the smart window may be a smart window product having the same configuration as shown in FIG. 5a, manufactured by bonding window glass to one surface of the optical laminate by a lamination method, or may be a smart window product having the same configuration as shown in FIG. 5b, manufactured by applying a UV-curable adhesive to both surfaces of the optical laminate, and then bonding window glass thereto, followed by UV curing.

### Mode for Invention

Hereinafter, exemplary embodiments of the present invention will be described in detail. However, the present invention is not limited to the embodiments disclosed below and may be embodied in various different forms. Rather, these embodiments are provided so that the disclosure of the present invention will be thorough and complete and will fully convey the scope of the present invention to those skilled in the art, and the present invention will only be defined by the scope of the appended claims.

### Preparation Examples

### Preparation Example 1: Production of Polarizing Plate

### (1) Swelling Treatment Process

A 60-µm-thick polyvinyl alcohol film (raw film) (manufactured by Kuraray Co., Ltd., trade name: Kurare Poval Film VF-PE#6000, average degree of polymerization: 2,400, degree of saponification: 99.9 mol%) was continuously unwound from a raw film roll, conveyed, and dipped in a swelling bath containing pure water at 20°C for 30 seconds. In this swelling treatment process, roll-to-roll stretching (longitudinal uniaxial stretching) was performed by creating a difference in peripheral speed between the nip rolls. The stretching ratio with respect to the raw film was set to 2.5 times.

### (2) Dyeing Treatment Process

Next, the film that passed through the nip rolls was dipped in a dyeing bath containing pure water/potassium iodide/iodine/boric acid at a mass ratio of 100/2/0.01/0.3 at 30°C for 120 seconds. In this dyeing treatment process, roll-to-roll stretching (longitudinal uniaxial stretching) was performed by creating a difference in peripheral speed between the nip rolls. The stretching ratio with respect to the film after the swelling treatment process was set to 1.1 times.

### (3) Crosslinking Treatment Process

Next, the film that passed through the nip rolls was dipped in a first crosslinking bath containing pure water/potassium iodide/boric acid at a mass ratio of 100/12/4 at 56°C for 70 seconds. Roll-to-roll stretching (longitudinal uniaxial stretching) was performed by creating a difference in peripheral speed between the nip rolls and the nip rolls provided between the first crosslinking bath and the second crosslinking bath. The stretching ratio with respect to the film after the dyeing treatment process was set to 1.9 times.

### (4) Color Complementing Process

Next, the film after the crosslinking treatment was dipped in a second crosslinking bath containing potassium iodide/boric acid/pure water at a mass ratio of 9/2.9/100 at 40°C 10 seconds.

### (5) Cleaning Treatment Process

Next, the film after the second crosslinking treatment was dipped in a cleaning bath containing pure water at 14°C for 5 seconds, and cleaned using a shower method with a shower volume of 5 m³/h at a shower temperature of 14°C.

### (6) Drying Treatment Process

Next, the film after the cleaning treatment process was heat-dried at 80°C for 190 seconds by passage through a drying oven, thereby producing a polarizer film. The moisture content after drying was 13.6%, and the thickness of the obtained polarizer film was about 18 µm.

### (7) Bonding Treatment Process

Next, as an adhesive, an aqueous adhesive containing 5 parts by mass of polyvinyl alcohol per 100 parts by mass of water was prepared. Thereafter, a protective film was laminated on both surfaces of the polarizer film using the prepared UV adhesive. The obtained laminate was exposed to UV light, and the adhesive was cured, thereby producing a polarizing plate. The thickness of the adhesive layer in the produced polarizing plate was about 2 µm.

### Preparation Example 2: Formation of Hard Coating Layer

A composition for forming a hard coating layer was prepared by mixing 16.2 g of a dendrimer compound (Miwon Specialty Chemical Co., Ltd., SP-1106), 14.4 g of inorganic nanoparticles (10 to 20 nm; silica particles: 50 wt%; solvent: methyl ethyl ketone (MEK)), 1.8 g of a polyfunctional (meth)acrylate containing an ethylene glycol group, 0.7 g of a photoinitiator (1-hydroxycyclohexyl phenyl ketone), and 2.9 g of methyl ethyl ketone.

The obtained composition for forming a hard coating layer was applied by bar coating to one surface of each of the first and second polarizing plates (produced in Preparation Example 1 after determining the Mayer bar type and solid content to calculate the post-curing hard coating thickness. The applied composition was dried at 80°C for 5 minutes, and then cured with a high-pressure mercury lamp at a light dose of 500 mJ/cm², thereby producing first and second polarizing plates, each having a hard coating layer formed on one surface thereof.

### Preparation Example 3: Formation of Column Spacers

### <Binder Resin>

A flask equipped with a stirrer, a thermometer, a reflux condenser, dropping lots, and a nitrogen inlet tube was prepared.

As a monomer dropping lot, 40 parts by weight of a mixture of 3,4-epoxytricyclodecan-8-yl (meth)acrylate and 3,4-epoxytricyclodecan-9-yl (meth)acrylate at a molar ratio of 50:50, 50 parts by weight of methyl methacrylate, 40 parts by weight of acrylic acid, 70 parts by weight of vinyl toluene, 4 parts by weight of t-butyl peroxy-2-ethylhexanoate, and 40 parts by weight of propylene glycol monomethyl ether acetate (PGMEA) were added and ready to be stirred.

As a chain transfer agent dropping lot, 6 parts by weight of n-dodecanethiol and 24 parts by weight of PGMEA were added and ready to be stirred. Then, 395 parts by weight of PGMEA was added to the flask, and the atmosphere inside the flask was changed from air to nitrogen, and then the temperature of the flask was raised to 90°C while stirring. Thereafter, dropping of the monomer and the chain transfer agent from the dropping lots were started. The dropping was carried out for 2 hours at 90°C, and after 1 hour, the temperature was increased to 110°C and maintained for 5 hours to obtain a binder resin having a solid acid value of 100 mg-KOH/g and a weight-average molecular weight of 17000 and not containing Si-O bonds.

### <Photosensitive Resin Composition>

A photosensitive resin composition was prepared by mixing 12.41 wt% of the obtained binder resin, 0.59 wt% of MA0701 (POSS, Hybrid Plastic Inc.) and 5.32 wt% of dipentaerythritol hexaacrylate (Kayarad DPHA; Nippon Kayaku Co., Ltd.) as photopolymerizable compounds, 1.58 wt% of ethanone-1-[9-ethyl-6-(2-methyl-4-tetrahydropyranyloxybenzoyl)-9H-carbazol-3-yl]-1-(O-acetyloxime) (Irgacure OXE-02; Ciba) as a photopolymerization initiator, 0.1 wt% of BYK-052N (BYK) as an additive, and 80 wt% of propylene glycol monomethyl ether acetate (PGMEA) as a solvent.

### <Formation of Column Spacers>

Using the photosensitive resin composition described above, a cured film pattern was formed in the following manner. The hard coating layer of the first polarizing plate obtained in Preparation Example 2 was coated with the resin composition using a spin coater, and at this time, the height of the coated film was adjusted by the rotation speed (rpm) to form a resin coating layer. After application, the coating layer was dried on a hot plate at a temperature of 80°C for 2 minutes, and then exposed to active energy rays such as ultraviolet rays through a mask (150 µm gap) and a prism at with an irradiation energy dose of 60 mJ/cm² by referring to the manufacturing method of Korean Patent No. 10-0990074. The film obtained by exposure was developed (development time: 60 seconds) using a developer (0.04% KOH aqueous solution, 25°C). Thereafter, the film was placed in a convection oven at 80°C and then post-baked for 60 minutes. Thereby, a cured film pattern having the column spacer height and the column spacer inclination angle adjusted to a predetermined angle as described in the Example below was formed.

### Preparation Example 4: Formation of Transparent Conductive Layer

The second polarizing plate having the hard coating layer formed thereon, produced according to Preparation Example 2, and the first polarizing plate having the column spacer, produced according to Preparation Example 3 were placed, the sputter gun was operated by application of 450 W DC power, and plasma was induced in the ITO (10 wt% Sn doped In₂O₃) target to form a first transparent conductive layer and a second transparent conductive layer, each having a thickness of 90 nm. The formed first and transparent conductive layers were treated with ions by operating the ion gun with 50 W DC power. At this time, the pressure was maintained at 3 mTorr at room temperature, and argon gas and oxygen gas were supplied at 30 sccm and 1 sccm, respectively. Here, the ITO thickness was measured using FT-SEM, and ITO sheet resistance (Ω/□) was measured using a four-point probe.

### Preparation Example 5: Formation of Alignment Films

The first and second transparent conductive layers formed in Preparation Example 4 were coated with a TN alignment solution (RN-4662, Nissan Chemical Industries, Ltd.), and the thickness of the coated alignment solution was adjusted using a Mayer bar, followed by drying (80°C/2 minutes). Thereafter, the dried alignment solution was irradiated with UV light to form alignment films.

### Preparation Example 6: Manufacturing of Optical Laminate

A sealant (UVF-006, 70,000 mPa·s, SEKISUI Co., Ltd.) was applied to the outer peripheral surface of the first transparent conductive layer, formed in Preparation Example 4, using a sealant dispenser (SHOTmini 200Ωx, MUSASHI Co., Ltd.) with a sharp needle (SPN-0.25-12.7L) at a discharge pressure of 200 mPa according to the product size. Thereafter, in a state in which the first polarizing plate and the second polarizing plate were arranged parallel to each other so that the polarizing axes were at 0° or 90° with respect to each other, a liquid crystal was injected onto the alignment films of the first transparent conductive layer using the ODF (One Drop Filling) process. Thereafter, the second transparent conductive layer and the first transparent conductive layer were bonded to each other at a pressure of 3 kg/cm², and UV curing (500 mJ/cm²) was performed along the sealant line, thereby manufacturing an optical laminate for a smart window. Thereafter, a conductive copper tape (TERAOKA, No. 8323) was adhered and connected to the first transparent conductive layer and the second transparent conductive layer.

### <Examples and Comparative Examples>

### Examples 1 to 10 and Comparative Examples 1 and 2: Manufacturing of Optical Laminates

Optical laminates of Examples 1 to 10 and Comparative Examples 1 to 2 were manufactured in the same manner as in Preparation Examples 1 to 6, except that the inclination angle of the column spacer, the width of the top of the column spacer, the height of the column spacer, the ratio of the area of the top of the column spacer to that of the second polarizing plate, and the thickness of the alignment film were as shown in Table 1 below. The results of performing evaluation according to the Experimental Example below are shown in Table 1 below.

### Comparative Example 3: Manufacturing of Optical Laminate

An optical laminate was manufactured in the same manner as in Example 1, except that the first transparent conductive layer and the second transparent conductive layer were formed on the first polarizing plate and second polarizing plate having the hard coating layer, produced according to Preparation Example 2, respectively, in the same manner as in Preparation Example 4, and the column spacer was formed on the first transparent conductive layer in the same manner as in Preparation Example 3.

Next, an alignment film was formed on the second transparent conductive layer and the first transparent conductive layer having the column spacer formed thereon in the same manner as in Preparation Example 5, and then an optical laminate was manufactured in the same manner as in Preparation Example 6. In this case, the inclination angle of the column spacer, the width of the top of the column spacer, the height of the column spacer, the ratio of the area of the top of the column spacer to that of the second polarizing plate, and the thickness of the alignment film are as shown in Table 1 below.

### Comparative Example 4: Manufacturing of Optical Laminate

An optical laminate was manufactured in the same manner as in Example 1, except that the first transparent conductive layer and the second transparent conductive layer were formed on the first polarizing plate and second polarizing plate having the hard coating layer, produced according to Preparation Example 2, respectively, in the same manner as in Preparation Example 4, and the first alignment film and the second alignment film were formed in the same manner as in Preparation Example 5.

Next, the column spacer was formed on the first alignment film in the same manner as in Preparation Example 3, and then the optical laminate was manufactured in the same manner as in Preparation Example 6. In this case, the inclination angle of the column spacer, the width of the top of the column spacer, the height of the column spacer, the ratio of the area of the top of the column spacer to that of the second polarizing plate, and the thickness of the alignment film are as shown in Table 1 below.

**[Table 1]**

| | Alignment film thickness (nm) | Column spacer | | | |
|---|---|---|---|---|---|
| | | Inclination angle (°) | Ratio of area of top (%) | Height (h) (µm) | Top width (d) (µm ) |
| Example 1 | 30 | 45 | 3.0 | 6 | 6 |
| Example 2 | 300 | 45 | 3.0 | 6 | 6 |
| Example 3 | 150 | 45 | 1.2 | 2 | 12 |
| Example 4 | 150 | 45 | 0.2 | 10 | 3 |
| Example 5 | 150 | 10 | 0.3 | 4 | 4 |
| Example 6 | 150 | 20 | 1.2 | 4 | 12 |
| Example 7 | 150 | 70 | 4.2 | 4 | 60 |
| Example 8 | 25 | 45 | 2.7 | 6 | 6 |
| Example 9 | 310 | 45 | 2.7 | 6 | 6 |
| Example 10 | 150 | 75 | 4.5 | 6 | 6 |
| Comparative Example 1 | 150 | 90 | 5.5 | 6 | 6 |
| Comparative Example 2 | 150 | 110 | 6.5 | 6 | 6 |
| Comparative Example 3 | 150 | 45 | 3.0 | 6 | 6 |
| Comparative Example 4 | 150 | 45 | 3.0 | 6 | 6 |

### <Experimental Example>

### (1) Evaluation of Driving Reliability

For the optical laminates of the Examples and the Comparative Examples, copper tape electrodes were connected in a room temperature environment, and voltage turn-on (10 V AC voltage) and turn-off were repeated for 200,000 cycles, and the evaluation of driving reliability was performed according to the evaluation criteria shown in Table 2 below. The results are shown in Table 3 above.

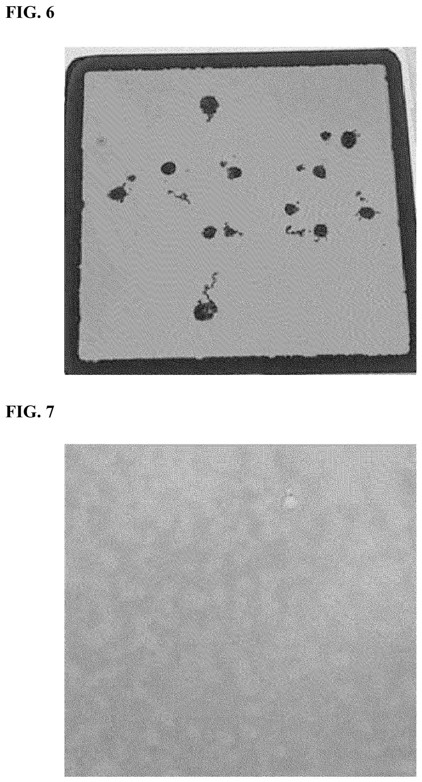

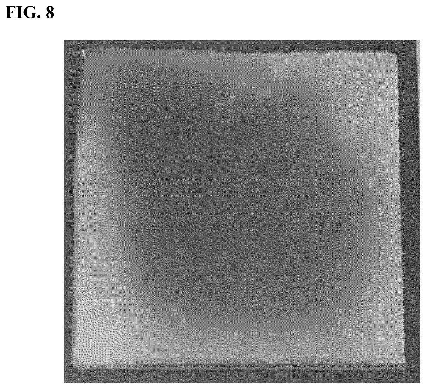

For reference, when the voltage is turned on, the criterion for the liquid crystal color front black means that the transmittance is less than 0.5% and the single transmittance color b* is within the range of -3 to 3, and when the voltage is turned off, the criterion for the front projection is a transmittance of 20% or more. In addition, when observing the appearance, if a black amorphous spot defect (see FIG. 6), a liquid crystal spot defect (see FIG. 7), a light leakage phenomenon (see FIG. 8), a black spot defect, or a white spot defect was observed, it was marked as "changed".

**[Table 2]**

| | Voltage turn-on | | Voltage turn-off | |
|---|---|---|---|---|
| | Liquid crystal color | Appearance | Liquid crystal color | Appearance |
| Good | Front black | Not changed | Front transparent | Not changed |
| Poor | Unsatisfied front black | Changed | Unsatisfied front transparent | Changed |

| | | | | |
|---|---|---|---|---|
| ∘: All criteria are good; driving reliability evaluation is normal (200,000 cycles) Δ: Any one criterion is poor; driving reliability evaluation is normal (100,000 cycles or more to less than 200,000 cycles) X: All criteria are bad, driving reliability evaluation is poor (less than 100,000 cycles) | | | | |

### (2) Evaluation of Optical Characteristics

A spectrophotometer (CM-3700d, Konica Minolta) was used for the optical laminates of the Examples and the Comparative Examples. The second polarizing plate was positioned in the direction of the light source, and the transmittance (%) values upon voltage turn-on and voltage turn-off, and the parallel and orthogonal values for the single transmittance color b* values were measured and then averaged. The results are shown in Table 3 below.

**[Table 3]**

| | Driving reliability evaluation | Evaluation of optical characteristic | | | |
|---|---|---|---|---|---|
| | | Voltage turn-off | | Voltage turn-on | |
| | | Transmittance (%) | Single b* | Transmittance (%) | Single b* |
| Example 1 | ○ | 35.5 | 5.0 | 0.1 | 0 |
| Example 2 | ○ | 34.7 | 5.5 | 0.1 | 0 |
| Example 3 | ○ | 35.5 | 4.3 | 0.1 | 0 |
| Example 4 | ○ | 35.6 | 6.2 | 0.1 | 0 |
| Example 5 | ○ | 35.8 | 5.2 | 0.1 | 0 |
| Example 6 | ○ | 35.8 | 5.1 | 0.1 | 0 |
| Example 7 | ○ | 35.5 | 5.0 | 0.1 | 0 |
| Example 8 | △ | 35.6 | 5.0 | 0.1 | 0 |
| Example 9 | △ | 34.7 | 5.5 | 0.1 | 0 |
| Example 10 | △ | 35.1 | 5.2 | 0.1 | 0 |
| Comparative Example 1 | X | 35.0 | 5.1 | 35.0 | 5.1 |
| Comparative Example 2 | X | 34.9 | 5.1 | 34.9 | 5.1 |
| Comparative Example 3 | X | 35.4 | 5.2 | 17.2 | 2.3 |
| Comparative Example 4 | X | 18.2 | 3.4 | 18.2 | 3.4 |

Referring to Table 3 above, it was evaluated that Examples 1 to 10 including the column spacer 150 of the present invention were superior, without the occurrence of liquid crystal color and appearance defects regardless of the voltage application state, to Comparative Examples 1 and 2 having a column spacer different from the column spacer of the present invention, or Comparative Examples 3 and 4 in which the lamination order of optical members constituting the laminate is different from that in the present invention.

On the other hand, in the case of Comparative Example 1 where the inclination angle of the column spacer is a right angle and in the case of Comparative Example 2 where the inclination angle is an obtuse angle, the transparent conductive layer was not deposited on the lateral side of the column spacer, and therefore, in the driving reliability evaluation, liquid crystal spot defects as well as afterimages during driving occurred, or liquid crystals were not driven.

In addition, it was observed that, in the case of Comparative Example 3 where the alignment film was formed on the column spacer and in the case of Comparative Example 4 where the column spacer was formed on the alignment film, a phenomenon occurred in which the column spacer was dissolved by the alignment solution solvent, and thus a black amorphous spot defect was visible from the beginning, resulting in an unsatisfactory appearance.

For reference, it was observed that, in the case of Examples 8 and 9 where the specifications and inclination angle of the column spacer are within the ranges specified in the present invention, but the thickness of the alignment film is out of the range of 30 to 300 nm, which is a preferred thickness range, any one criterion was poor in the driving reliability evaluation. That is, in the case of Example 8 where the thickness of the alignment film is less than 30 nm, a short circuit occurred between the transparent conductive layers, and black amorphous spots were visible. In addition, in the case of Example 9 where the thickness of the alignment film is more than 300 nm, the liquid crystal color did not satisfy the front black criterion, resulting in liquid crystal spot defects, and afterimages were visible during driving.

In the case of Example 10 where the specifications and inclination angle of the column spacer are within the ranges specified in the present invention, but the inclination angle is out of preferred inclination angle range, which is 70° or less, the number of driving cycles in the driving reliability evaluation did not reach 200,000, like the case of Examples 8 and 9.

Therefore, it can be seen that the transmittance variable optical laminate of the present invention has excellent reliability without the occurrence of liquid crystal defects or a current short circuit.

### Industrial Applicability

The transmittance variable optical laminate according to the present invention may have excellent reliability for liquid crystal driving by preventing deformation of the spacer, change in performance of the alignment film, and occurrence of liquid crystal defects.

## Claims

1. A transmittance variable optical laminate comprising:
a first laminate comprising a first polarizing plate, at least one column spacer formed on one surface of the first polarizing plate, a first transparent conductive layer formed on the first polarizing plate having the at least one column spacer formed thereon, and a first alignment film formed on the first transparent conductive layer;
a second laminate opposite to the first laminate and comprising a second polarizing plate, a second transparent conductive layer, and a second alignment film sequentially laminated; and
a liquid crystal layer disposed between the first alignment film and the second alignment film,
wherein an inclination angle formed by a tangent of a lateral side of the column spacer with respect to the first polarizing plate comprises an acute angle.

2. The transmittance variable optical laminate of claim 1, wherein the inclination angle of the column spacer is 70° or less.

3. The transmittance variable optical laminate of claim 1, wherein the column spacer has a height of 2 to 10 µm and a top width of 4 to 60 µm.

4. The transmittance variable optical laminate of claim 1, wherein an area of a top of the column spacer is 0.2 to 5.0% of an area of the second polarizing plate.

5. The transmittance variable optical laminate of claim 1, wherein at least one of the first alignment film and the second alignment film has a thickness of 30 to 300 nm.

6. The transmittance variable optical laminate of claim 1, wherein at least one of the first alignment film and the second alignment film is driven in at least one mode selected from among a twisted nematic (TN) mode, a super-twisted nematic (STN) mode, and a vertical alignment (VA) mode.

7. The transmittance variable optical laminate of claim 1, wherein at least one of the first polarizing plate and the second polarizing plate comprises at least one functional layer selected from the group consisting of a protective layer, a retardation matching layer, and a refractive index-matching layer.

8. The transmittance variable optical laminate of claim 1, wherein at least one of the first polarizing plate and the second polarizing plate has a thickness of 30 to 200 µm.

9. The transmittance variable optical laminate of claim 1, wherein the first transparent conductive layer is formed in direct contact with the first polarizing plate having the column spacer formed thereon, without including a separate substrate therebetween, and
the second transparent conductive layer is formed in direct contact with the second polarizing plate without including a separate substrate therebetween.

10. The transmittance variable optical laminate of claim 1, wherein the first transparent conductive layer is formed on the first polarizing plate having the column spacer formed thereon with a highly adhesive layer interposed therebetween, and
the second transparent conductive layer is formed on the second polarizing plate with a highly adhesive layer interposed therebetween.

11. The transmittance variable optical laminate of claim 1, wherein at least one of the first transparent conductive layer and the second transparent conductive layer comprises include at least one selected from the group consisting of a transparent conductive oxide, a metal, a carbonaceous material, a conductive polymer, a conductive ink, and nanowires.

12. The transmittance variable optical laminate of claim 1, further comprising at least one selected from the group consisting of a pressure-sensitive adhesive layer, a UV-absorbing layer, and a hard coating layer.

13. The transmittance variable optical laminate of claim 12, wherein the pressure-sensitive adhesive layer is formed using at least one pressure-sensitive adhesive selected from an acrylic pressure-sensitive adhesive, a rubber-based pressure-sensitive adhesive, a silicone-based pressure-sensitive adhesive, a urethane-based pressure-sensitive adhesive, a polyvinyl alcohol-based pressure-sensitive adhesive, a polyvinyl pyrrolidone-based pressure-sensitive adhesive, a polyacrylamide-based pressure-sensitive adhesive, a cellulose-based pressure-sensitive adhesive, a vinyl alkyl ether-based pressure-sensitive adhesive, and a photocurable adhesive.

14. A method for manufacturing the transmittance variable optical laminate of any one of claims 1 to 13.

15. A smart window comprising the transmittance variable optical laminate of any one of claims 1 to 13.
